Europäisches Patentamt

European Patent Office

Office européen des brevets

(11) Veröffentlichungsnummer: **0 052 197**
A2

(12) # EUROPÄISCHE PATENTANMELDUNG

(21) Anmeldenummer: 81107394.9

(51) Int. Cl.³: **B 23 P 1/08**

(22) Anmeldetag: 18.09.81

(30) Priorität: 17.11.80 DE 3043339

(43) Veröffentlichungstag der Anmeldung:
26.05.82 Patentblatt 82/21

(84) Benannte Vertragsstaaten:
AT BE CH FR GB IT LI LU NL SE

(71) Anmelder: Friedrich Deckel Aktiengesellschaft
Plinganserstrasse 150
D-8000 München 70(DE)

(72) Erfinder: Weckerle, Dieter
Pfaffenriedstrasse 2
D-8192 Geretsried-Gelting(DE)

(54) Generator für eine Elektro-Erosionsmaschine.

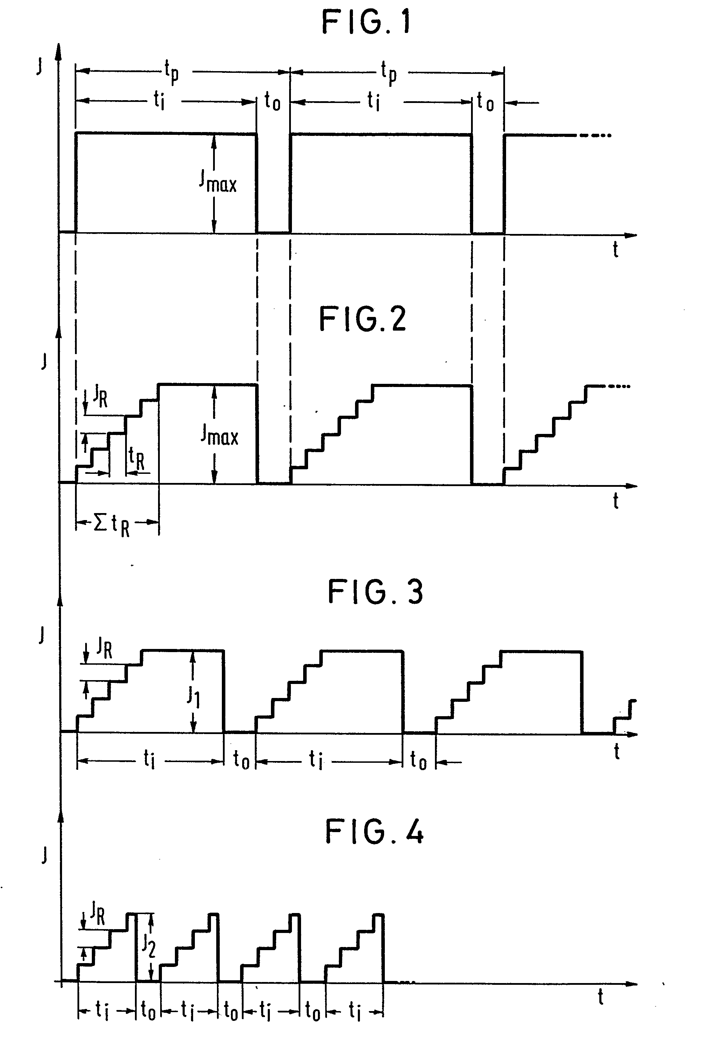

(57) Die Erfindung betrifft einen Generator für eine Elektro-Erosionsmaschine, bei der der Arbeitsstrom über mehrere parallel geschaltete Leistungsstufen stufenweise zuschaltbar ist. Im Bereich des stufenweisen Anstieges des Arbeitsstromes wird gleichzeitig durch Verkürzung der Impulszeit $t_i$ auch die erreichbare Stromstärke $J_2$ verringert. Auf diese Weise kann eine technologisch günstige Beziehung zwischen Impulszeit und Stromstärke zwangsweise hergestellt und insoweit Fehleinstellungen vermieden werden (Figur 4).

FIG. 4

EP 0 052 197 A2

## Generator für eine Elektro-Erosionsmaschine

Die Erfindung betrifft einen Generator für eine Elektro-
Erosionsmaschine der im Oberbegriff des Anspruchs 1 genannten Art.

Die meisten modernen Generatoren arbeiten nach dem Prinzip,
nach welchem die Funkenstrecke von einer Gleichspannungsquelle über eine oder mehrere steuerbare Leistungsstufen
versorgt wird. Die die Arbeitsleistung der Maschine bestimmenden Betriebswerte, wie Spannung, Strom, Impuls- und Pausenzeiten können im wesentlichen unabhängig voneinander eingestellt werden. Die Einstelldaten werden beispielsweise einer
Tabelle entnommen und von Hand oder über spezielle Programmkarten eingegeben. Dabei besteht grundsätzlich auch die Möglichkeit, Einstellungen vorzunehmen, bei denen sich ein ungünstiges Arbeitsergebnis ergibt.

Insbesondere ist darauf zu achten, daß mit zunehmender Arbeitsfrequenz, d. h. mit kürzeren Impulszeiten, der Arbeitsstrom
verringert werden muß, und zwar einerseits wegen der Leistungsgrenzen der Transistoren, andererseits aber vor allem aus bearbeitungstechnologischen Gründen; es hat sich gezeigt, daß
ein hoher Arbeitsstrom bei gleichzeitiger hoher Impulsfrequenz
zu großer Rauhigkeit, hohem Elektrodenverschleiß sowie zu vermehrter Lichtbogenbildung führt.

Bei den meisten bekannten Generatoren wird der Arbeitsstrom
durch Veränderung von im Arbeitsstromkreis angeordneten Widerständen verändert. Es ist auch schon bekannt, den Arbeitsstrom durch Zu- oder Abschalten von einzelnen parallel geschalteten Leistungsstufen zu verändern. In jedem Fall ist jedoch der Arbeitsstrom unabhängig von der Impulsfrequenz einstellbar, wobei auch entgegen den Empfehlungen der obengenannten Tabellen Einstellungen getroffen werden können, die außerhalb der optimalen Arbeitsbereiche liegen.

Es ist die Aufgabe der vorliegenden Erfindung, einen Generator der gattungsgemäßen Art zu schaffen, bei welchem zumindest im Bereich hoher Impulsfrequenzen, d. h. also im Schlichtbetrieb, eine gewisse automatische Zuordnung einer technologisch günstigen Stromstärke zur vorgewählten Impulsfrequenz erfolgt.

Diese Aufgabe ist erfindungsgemäß durch die im Kennzeichen des Anspruches 1 genannten Merkmale gelöst.

Der Arbeitsstrom steigt in jedem Arbeitsimpuls stufenartig auf einen Wert an, der jeweils durch die Anzahl der zugeschalteten Leistungsstufen vorgegeben ist. Da die Leistungsstufen in festgelegten Zeitabständen geschaltet werden, ergibt sich innerhalb des gestuften Anstiegsbereiches eine eindeutige Zuordnung von Stromstärke zu Impulszeit bzw. Impulsbreite. Durch die Möglichkeit, die Impulszeit vorrangig vor der Stufenzahl zu wählen, ist innerhalb des gestuften Anstiegsbereiches mit der gewählten Impulszeit gleichzeitig die zugehörige, nach technologischen Gegebenheiten festgelegte Arbeitsstromstärke bestimmt.

Es ist zwar schon bekannt, die einzelnen Leistungsstufen nacheinander zuzuschalten, so daß sich ein gestufter Arbeitsstromanstieg in jedem Arbeitsimpuls ergibt. Dieser allmähliche Anstieg des Arbeitsstromes soll vor allem beim Schruppbetrieb einen geringeren relativen Elektrodenverschleiß bewirken (Bericht Nr. 163-1/78, Laboratorium für Werkzeugmaschinen und Betriebslehre der Technischen Hochschule Aachen).
Bei dieser bekannten Einrichtung ist jedoch keine Steuerung
vorgesehen, die es erlaubt, den einzelnen Impuls noch im gestuften Anstiegsbereich gezielt abzubrechen und so auch die
erreichte Arbeitsstromstärke zu begrenzen.

Das Zeitschaltwerk sowie die Einrichtung zur Vorwahl der Anzahl der Leistungsstufen sind vorzugsweise elektronische Bauelemente, die mit den weiteren Steuereinrichtungen der Maschine integriert sind und beispielsweise einen elektronischen Prozessrechner umfassen, der es erlaubt, die Zeitabstände und Stromstärken der Leistungsstufen zu variieren, um
sie an bestimmte Werkzeug-Werkstückpaarungen sowie an andere
technologische Gegebenheiten anpassen zu können.

Weitere Merkmale und Vorteile der Erfindung ergeben sich aus
den weiteren Ansprüchen sowie der Beschreibung.

In der Zeichnung ist ein Ausführungsbeispiel der Erfindung dargestellt und im folgenden näher beschrieben. Es zeigen:

Fig. 1    ein Diagramm, welches in idealisierter Form den Verlauf von Rechteckstromimpulsen über der Zeit darstellt;

Fig. 2    ein Diagramm, in dem der Arbeitsstrom stufenartig ansteigt;

Fig. 3    ein Diagramm gemäß Fig. 2, bei dem jedoch die Stufenzahl und die Impulsdauer geändert sind;

Fig. 4    ein Diagramm gemäß Fig. 2, bei welchem der Impuls im
          gestuften Anstiegsbereich abgebrochen ist;

Fig. 5a bis j   ein Impulsdiagramm für einen im gestuften Anstiegsbereich abgebrochenen Arbeitsimpuls;

Fig. 6   ein Prinzipschaltbild einer erfindungsgemäßen
         Schaltung.

In Fig. 1 ist in idealisierter Darstellung der Verlauf des
Arbeitsstromes J über der Zeit t aufgetragen, und zwar bei
einer Verwendung von Rechteckimpulsen. Dabei ist zur Vereinfachung die übliche Zündverzögerung am Beginn jedes Arbeitspulses nicht dargestellt worden. Der Strom J steigt
steil auf seinen Höchstwert $J_{max}$ an, behält diesen für die
Arbeitszeit $t_i$ bei und fällt wieder auf Null ab. Nach der
Pausenzeit $t_o$ steigt er erneut auf seinen Höchstwert und so
fort. Die gesamte, die Arbeitszeit $t_i$ und die Pausenzeit $t_o$
umfassende Impulsperiode ist mit $t_p$ bezeichnet.

Durch die stufenweise Zuschaltung der parallel geschalteten
Leistungsstufen ergibt sich der Stromverlauf gemäß Fig. 2,
bei welchem der Strom J beispielsweise in sechs gleichen
Stufen $J_R$ auf seinen Höchstwert $J_{max}$ ansteigt und diesen
Höchstwert für die Zeit bis zum Ablauf von $t_i$ beibehält. Die
Zeit, in der die einzelnen Leistungsstufen aufeinanderfolgen,
ist mit $t_R$ bezeichnet.

In Fig. 3 ist gezeigt, daß die Arbeitszeit $t_i$ auch kürzer eingestellt werden kann. Solange diese Arbeitszeit nicht kürzer
wird als die Zeit $\zeta t_R$, hat die Verkürzung der Arbeitszeit -
und damit die Erhöhung der Impulsfrequenz - keinen Einfluß
auf die maximale Stromstärke. Diese kann ohne weiteres ihren
Höchstwert $J_{max}$ erreichen. Unabhängig davon kann jedoch auch
die Stromstärke dadurch begrenzt werden, daß mit Hilfe der
Stufenvorwahl nur ein Teil der parallel geschalteten Leistungsstufen zugeschaltet werden. In Fig. 3 sind beispielsweise nur
fünf Leistungsstufen geschaltet, so daß der Arbeitsstrom auf
den kleineren Wert $J_1$ begrenzt wird.

Fig. 4 zeigt den Fall, in dem die Arbeitszeit $t_i$ so kurz wird, daß sie in die Zeit des gestuften Anstieges fällt. Im vorliegenden Beispiel wird durch die Wahl der kurzen Arbeitszeit $t_i$ der Arbeitsimpuls bei der vierten Stromstufe abgeschnitten. Dadurch wird auch in dem Fall, in dem keine Begrenzung der Stufenzahl vorgewählt ist, der Arbeitsstrom auf den mit vier Stufen erreichbaren Wert $J_2$ begrenzt. Es ist also nicht möglich, dieser kurzen Arbeitszeit eine höhere Stromstärke zuzuordnen.

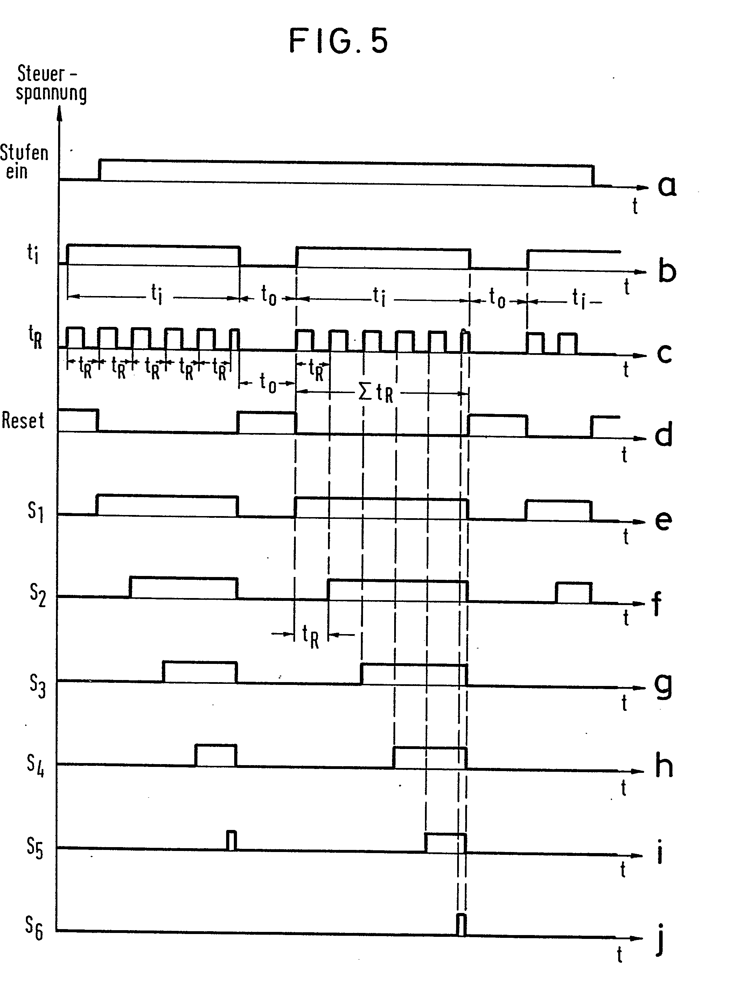

Fig. 5 zeigt ein Impulsdiagramm für den Steuerungsablauf, und zwar sind beispielsweise Steuerspannungen über der Zeit $t$ aufgetragen. In Fig. 5a ist dargestellt, daß zunächst in geeigneter Weise über Schalter oder mittels eines Programmbefehls das Signal "Stufen ein" geschaltet sein muß.

Fig. 5b zeigt die vom Generator kommenden Urimpulse $t_i$ und $t_o$, wobei die Länge dieser Urimpulse $t_i$ und $t_o$ vorgewählt werden können. Sie sind im vorliegenden Beispiel so lang, daß gerade sechs Leistungsstufen geschaltet werden.

Fig. 5c zeigt die vom Zeitschaltwerk im Zeitabstand $t_R$ kommenden Signale für die Zuschaltung der Leistungsstufen. Wie insbesondere am zweiten Urimpuls gemäß Fig. 5b erkennbar ist, werden in der vorgewählten Zeit $t_i$ sechs Leistungsstufen zugeschaltet, sofern die Stufenzahl durch Vorwahl nicht auf einen kleineren Wert begrenzt ist.

Nach dem Ende jedes Arbeitsimpulses $t_i$ wird das Zeitschaltwerk wieder auf den Anfang zurückgesetzt, was durch das in Fig. 5d dargestellte Reset-Signal dargestellt ist.

Die Figuren 5e bis 5j zeigen schließlich den Stromverlauf in den einzelnen parallel geschalteten Leistungsstufen $S_1$ bis $S_6$

bzw. die Ansteuersignale für diese Leistungsstufen. Wie insbesondere wieder an dem zweiten Urimpuls erkennbar ist, liefert die erste Leistungsstufe $S_1$ während der ganzen Arbeitszeit $t_i$ einen Strom, jede weitere Stufe wird jeweils um die Zeit $t_R$ später zugeschaltet. Die gesamte Stromstärke kann die Summe der einzelnen Stromstärken der einzelnen Stufen nicht übersteigen, da der Arbeitsimpuls bei der sechsten Leistungsstufe abbricht.

Es ist vorgesehen, die Stufenzeiten $t_R$ sowie die je Leistungsstufe durchgesetzte Stromstärke variabel zu machen, um die Einrichtung an bestimmte Paarungen von Werkstück und Werkzeug sowie an andere technologische Bedingungen anpassen zu können.

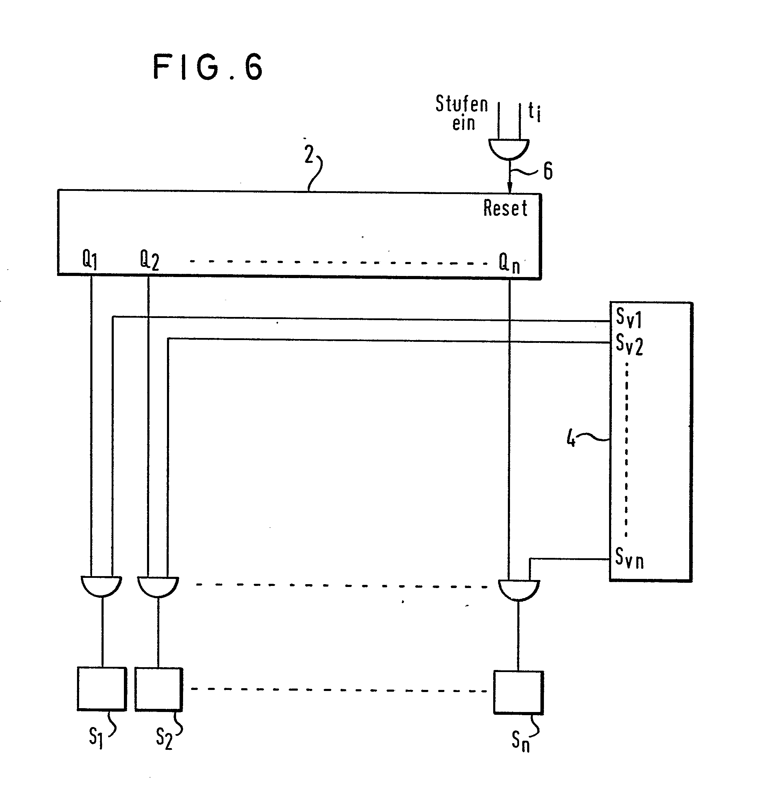

Fig. 6 zeigt ein Prinzipschaltbild einer Schaltung, mit der die vorbeschriebenen Impulsformen erzielt werden können. Die einzelnen Leistungsstufen $S_1$, $S_2$ usw. bis $S_n$ werden einerseits über ein Zeitschaltwerk 2, andererseits über eine Einrichtung 4 zur Stufenvorwahl angesteuert. In das Zeitschaltwerk 2 werden über Schalter oder mittels Programmbefehlen von einem Prozessrechner die Signale "Stufen ein" sowie $t_i$ und $t_o$ eingegeben. Außerdem erzeugt er selbst die Signale $t_R$. An seinen Ausgängen $Q_1$, $Q_2$ usw. bis $Q_n$ stehen die zeitlich aufeinanderfolgenden Signale für die Schaltung der Leistungsstufen $S_1$, $S_2$ usw. an. Die Einrichtung 4 ist beispielsweise als Schalter aufgebaut, welcher über die Ausgänge $S_{v1}$, $S_{v2}$ usw. bis $S_{vn}$ eine bestimmte, vorwählbare Anzahl von Stufen freigibt. Wenn über die Ausgänge $Q$ und $S_v$ jeweils entsprechende Signale kommen, werden die jeweils zugeordneten Stufen geschaltet.

Wenn der Urimpuls $t_i$ zu Ende ist, liegt am Eingang 6 des Zeitschaltwerkes ein Befehl an, welcher das Zeitschaltwerk wieder auf den Anfangszustand zurücksetzt (Reset).

## Patentansprüche:

1. Generator für eine Elektro-Erosionsmaschine, umfassend eine Gleichspannungsquelle, mehrere dieser nachgeordnete, zueinander parallel geschaltete Leistungsstufen, eine diesen nachgeordnete, mit dem Werkstück eine Funkenstrecke bildende Elektrode sowie eine Steuereinrichtung zur Ansteuerung der Leistungsstufen, insbesondere zur Steuerung von Impulszeit, Pausenzeit, Arbeitsstrom etc.,

dadurch gekennzeichnet,

daß die Steuereinrichtung ein Zeitschaltwerk (2) umfaßt, welches in jedem Arbeitsimpuls ($t_i$) die Leistungsstufen in bestimmten, festgelegten Zeitabständen ($t_R$) nacheinander zuschaltet, wobei die Zeitabstände ($t_R$) und die Stromstärke ($J_R$) der einzelnen Leistungsstufen jeweils in einem festgelegten Verhältnis zueinander stehen, und daß sie eine Einrichtung (4) zur Vorwahl der Anzahl der zuzuschaltenden Leistungsstufen umfaßt, wobei im Bereich des Arbeitsstromanstieges die Impulszeitvorwahl gegenüber der Stufenvorwahl vorrangig ist.

2. Generator nach Anspruch 1, dadurch gekennzeichnet, daß das Zeitschaltwerk (2) als elektronisches Schieberegister ausgebildet ist.

3. Generator nach einem der Ansprüche 1 oder 2, dadurch gekennzeichnet, daß die Einrichtung (4) zur Stufenvorwahl als elektronischer Schalter zur Freischaltung der zu den Leistungsstufen führenden Leitungen ausgebildet ist.

4. Generator nach einem der Ansprüche 1 bis 3, dadurch gekennzeichnet, daß die Zeitabstände ($t_R$) zwischen den Leistungsstufen zwischen 1 $\mu$s und 10 $\mu$s, vorzugsweise 3 $\mu$s betragen und daß die Stromstärke ($J_R$) je Leistungsstufe zwischen 2 $\underline{A}$ und 10 $\underline{A}$, vorzugsweise 5 $\underline{A}$ beträgt, und daß zwischen 5 und 20 Leistungsstufen, vorzugsweise 15 Leistungsstufen, vorgesehen sind.

5. Generator nach einem der Ansprüche 1 bis 4, dadurch gekennzeichnet, daß das Zeitschaltwerk (2) und die Einrichtung zur Stufenvorwahl in einem Prozessrechner integriert sind, der es erlaubt, die Zeitabstände ($t_R$) und Stromstärken ($J_R$) der Leistungsstufen zu verändern.

FIG.1

FIG.2

FIG.3

FIG.4

FIG. 5

2/3

0052197

0052197

FIG.6